# EUROPEAN PATENT APPLICATION

(11) **EP 4 748 660 A1**
(43) Date of publication of application: **27.05.2026**
(21) Application number: 24855223.4
(22) Date of filing: 22.02.2024
(51) Int. Cl.: B60S 9/02, B60S 5/00, B60S 5/02

(54) **ACCESS BRIDGE DEVICE AND BATTERY SWAP STATION**

(30) Priority: 18.08.2023 CN 202322237016 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Kraus & Lederer PartGmbB
(86) International application number: PCT/CN2024/078087
(87) International publication number: WO 2025/039489

(57) **Abstract**

An access bridge device (400), comprising at least one access bridge frame (410). The access bridge frame comprises a support member (10) and a transmission member (20), wherein the support member comprises a moving portion (11) and a bearing portion (12) arranged on the moving portion, the bearing portion being used for supporting a vehicle (1); and the transmission member comprises a guide portion (21) and a transmission portion (22), the guide portion extending in a first direction, and the transmission portion being connected to the support member and drivingly fitted with the guide portion, in order to drive the support member to move in the first direction. Further provided is a battery swap station provided with the access bridge device. The access bridge device is used for supporting a vehicle, facilitating entry of the vehicle into the battery swap station for battery replacement.

## Description

### CROSS-REFERENCE TO RELATED APPLICATIONS

The present application claims priority to Chinese Patent Application No. 202322237016.1, filed on Friday, August 18, 2023 and entitled "ACCESS BRIDGE DEVICE AND BATTERY SWAP STATION", which is incorporated herein by reference in its entirety.

### TECHNICAL FIELD

The present application relates to the field of battery swapping, particularly to an access bridge device and a battery swap station.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

When a battery is about to run out of charge after a vehicle operates for a period of time, the vehicle needs to enter a battery swap station where removal of a battery thereof and battery swapping are performed. In a battery swap station in a related technology, during arrival of a vehicle, it is not conducive to pass through a battery swap slot in the battery swap station, adversely affecting battery swapping.

### SUMMARY

In view of the above problems, the present application provides an access bridge device and a battery swap station. The access bridge device is used for supporting a vehicle, facilitating entry of a vehicle into a battery swap station for battery swapping.

In a first aspect, the present application provides an access bridge device, including at least one access bridge frame. The access bridge frame includes: a support member, including a moving portion and a bearing portion disposed on the moving portion, the bearing portion being used for supporting a vehicle; and a transmission member, including a guide portion and a transmission portion, the guide portion extending in a first direction, and the transmission portion being connected to the support member and drivingly fitted with the guide portion, in order to drive the support member to move in the first direction.

The access bridge device provided in the embodiment of the present application includes at least one access bridge frame. The access bridge frame includes the support member and the transmission member. The support member includes the moving portion and the bearing portion. The moving portion is arranged to support the bearing portion, and the bearing portion can be supported at a predetermined height, thereby providing support for a vehicle when the vehicle passes through a battery swap slot of a battery swap station. Front wheels of the vehicle are prevented from falling or being stuck in the battery swap slot, so that the vehicle can safely pass through the battery swap slot. In addition, the transmission member is correspondingly arranged. Its guide portion is extended in the first direction, and the transmission portion is connected to the support member and drivingly fitted with the guide portion, so that the support member can be driven to move in the first direction. After front wheels of a vehicle pass through the battery swap slot by being supported by the access bridge frame, the transmission member and the guide portion can cooperate to drive movement of the support member to avoid a space of the battery swap slot, facilitating removal and swapping of a battery.

In some embodiments, the access bridge frames have a quantity of two or more and are distributed in a second direction. The second direction intersects with the first direction.

The access bridge device includes two or more access bridge frames distributed in the second direction, so that the access bridge device is applicable for swapping for a vehicle including one battery, two batteries, or a plurality of batteries at a battery swap station. It may be compatible with battery swapping for different vehicle types, therefore enabling high compatibility and improving operation efficiency and asset utilization.

In some embodiments, in the second direction, a width of one of the two or more access bridge frames is W1, and a width of another one of the two or more access bridge frames is W2, where W1=2W2.

According to the access bridge device provided in the embodiments of the present application, in the second direction, a width of one of the two or more access bridge frames is W1, and a width of another one of the two or more access bridge frames is W2, where W1=2W2, so that swapping of a corresponding battery can be at least satisfied for a vehicle including one battery, two batteries, and three batteries, with high versatility.

In some embodiments, in the second direction, widths of access bridge frames of the two or more access bridge frames are equal.

With the above arrangement, swapping of a corresponding battery can also be satisfied for a vehicle including one battery, two batteries, and three batteries, enabling high versatility.

In some embodiments, the moving portion is a hollowed-out frame structure body, and the transmission portion is connected to the moving portion.

According to the access bridge device provided in the embodiments of the present application, the moving portion is a hollowed-out frame structure body, so that a strength of the moving portion can be ensured, and a weight and a cost of the moving portion can also be reduced. In addition, a requirement for driving the moving portion can be easily implemented by cooperation between the transmission portion and the guide portion.

In some embodiments, the moving portion includes an underframe and a plurality of support rods. The plurality of support rods are at least partially distributed in the first direction. Each of the support rods is connected between the bearing portion and the underframe. The transmission portion is connected to the underframe.

According to the access bridge device provided in the embodiments of the present application, the moving portion uses the foregoing form, and thus, a structure is simple, a cost is low, and a strength requirement can be ensured. The transmission portion is connected to the underframe, facilitating installation of the transmission portion and cooperation with the guide portion.

In some embodiments, a side of the bearing portion facing away from the moving portion has a horizontal support surface for bearing a vehicle.

According to the access bridge device provided in the embodiments of the present application, the side of the bearing portion facing away from the moving portion has the horizontal support surface, so that stable support can be provided for a vehicle to drive, thereby reducing difficulty of the vehicle in passing through a battery swap slot, and ensuring safety and stability for the vehicle during battery swapping.

In some embodiments, the guide portion includes a rack extending in the first direction. The transmission portion includes a gear engaged with the guide portion and a first driving portion connected to the gear. The first driving portion is connected to the support member.

According to the access bridge device provided in the embodiments of the present application, the guide portion and the transmission portion use the foregoing structural forms, and the first driving portion may be used to drive rotation of the gear. Since the gear is engaged with the rack and the first driving portion is connected to the support member, the gear can drive the support member to move relative to the rack in the first direction, thereby implementing an adjustment of an overall position of the support member in the first direction.

In some embodiments, the guide portion includes a lead screw extending in the first direction and a second driving portion driving the lead screw to rotate. The transmission portion includes a nut drivingly fitted with the lead screw. The nut is connected to the support member.

According to the access bridge device provided in the embodiments of the present application, with the foregoing arrangement, the second driving portion may be used to drive rotation of the lead screw, so that the nut is moved along the lead screw to drive the support member to move in the first direction, thereby also satisfying a position adjustment requirement for a support member.

In some embodiments, the access bridge frame further includes a slide rail. The moving portion is movably connected to the slide rail.

According to the access bridge device provided in the embodiments of the present application, the access bridge frame further includes the slide rail, and the moving portion is movably connected to the slide rail, so that guidance can be provided for movement of the moving portion in the first direction, thereby ensuring stability of movement of the moving portion in the first direction.

In some embodiments, the moving portion has a traveling wheel. The traveling wheel is arranged on the slide rail and movably connected to the slide rail.

According to the access bridge device provided in the embodiments of the present application, with the foregoing arrangement, on the basis of ensuring that the slide rail provides support and a guidance effect for the moving portion, operating resistance applied to the moving portion when it moves in the first direction can be reduced, thereby ensuring smooth operation.

According to a second aspect, the present application provides a battery swap station, including: a support platform, where a battery swap slot is concavely arranged on the support platform; and the foregoing access bridge device, where the access bridge device is arranged in the battery swap slot, and in the first direction, a width of the battery swap slot is greater than a width of the access bridge frame.

In some embodiments, the support platform has a top surface. The battery swap slot is concavely arranged in a third direction starting from the top surface. A surface of the bearing portion facing away from the moving portion is flush with the top surface in the third direction. The third direction intersects with the first direction.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, throughout the drawings, identical reference numerals are used to designate identical components. In the accompanying drawings:
FIG. 1 is a schematic structural diagram of a vehicle according to an embodiment of the present application.
FIG. 2 is a schematic structural diagram of a battery according to an embodiment of the present application.
FIG. 3 is a schematic structural diagram of an access bridge device according to an embodiment of this application.
FIG. 4 is a partial schematic structural diagram of an access bridge device according to an embodiment of this application.
FIG. 5 to FIG. 7 are schematic structural diagrams of cooperation between an access bridge device according to an embodiment of the present disclosure and a vehicle including three battery packs.
FIG. 8 and FIG. 9 are schematic structural diagrams of cooperation between an access bridge device according to an embodiment of the present disclosure and a vehicle including two battery packs.
FIG. 10 and FIG. 11 are schematic structural diagrams of cooperation between an access bridge device according to an embodiment of the present disclosure and a vehicle including one battery pack.

Reference numerals in specific implementations are as follows:
1 - vehicle; 100 - battery; 200 - controller; 300 - motor;
110 - box; 110a - first box portion; 110b - second box portion; 120 - battery cell;
400 - access bridge device;
410 - access bridge frame; 410a - first access bridge frame; 410b - second access bridge frame;
10 - support member; 11 - moving portion; 111 - underframe; 112 - support rod; 113 - traveling wheel; 12 - bearing portion; 121 - horizontal support surface;
20 - transmission member; 21 - guide portion; 22 - transmission portion; 221 - gear; 222 - first driving portion; 30 - slide rail;
500 - support platform; 510 - battery swap slot; 520 - top surface;
X - first direction; Y - second direction; Z - third direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

It should be noted that, unless otherwise specified, the technical terms or scientific terms used in the embodiments of the present application shall have the ordinary meanings as understood by a person of ordinary skill in the art to which the embodiments of the present application pertain.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In addition, the technical terms "first", "second" and the like are only used for descriptive purposes, and should not be construed as indicating or implying relative importance or implicitly indicating the number of technical features indicated. In the description of the embodiments of the present application, "a plurality of" means two or more unless specifically defined otherwise.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

With the development of new energy technologies, devices using batteries are increased, and when electric energy of electric devices runs out, the electric energy is usually replenished by connection with a charging device, for example, an electric vehicle may be charged by connecting it to a charging pile. Charging takes a long time, affecting user experience. Swapping a battery enables faster replenishment of electrical energy than charging.

For battery swapping from a chassis for most vehicles, especially heavy trucks, because the vehicles are heavy, the vehicles are not suitable for being lifted to swap a battery. Therefore, it is preferable to use a battery swap manner with a trench. When a vehicle enters a battery swap station, front wheels of the vehicle need to cross a battery swap slot. In the related technology, the vehicle is allowed to pass through a simple support placed in the battery swap slot. After the vehicle passes through it, the support placed in the battery swap slot is not easy to move or remove, affecting disassembly and assembly and swapping of a battery.

In view of the above, the embodiments of the present application provide an access bridge device and a battery swap station. The access bridge device is used for supporting a vehicle, facilitating entry of the vehicle into the battery swap station for battery swapping.

The access bridge device and the battery swap station disclosed in the embodiments of the present application may be used for, but are not limited to, swapping a battery of a vehicle. The vehicle may be a fuel vehicle, a gas vehicle, or a new energy vehicle, and the new energy vehicle may be a battery electric vehicle, a hybrid vehicle, or a range-extended electric vehicle.

In the following, a vehicle is used as an example of the electric device.

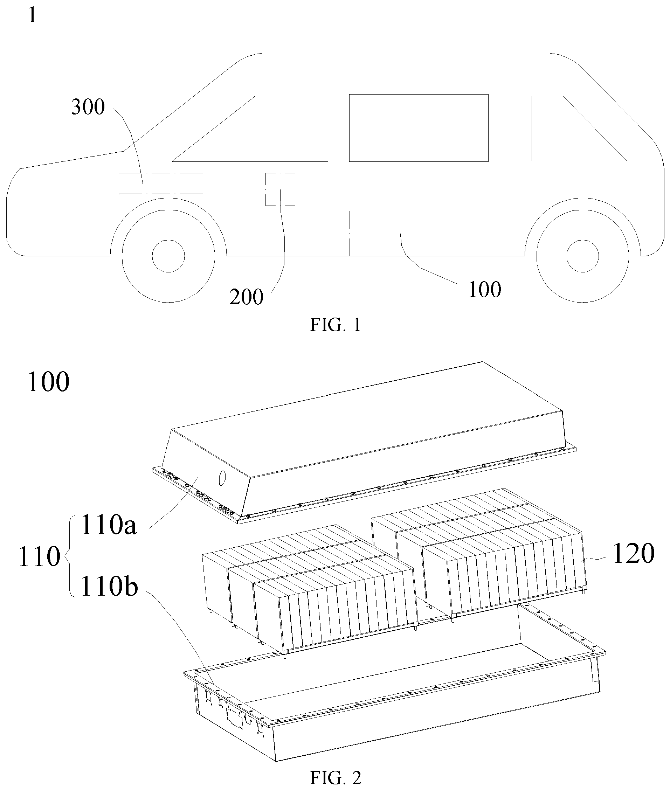

As shown in FIG. 1, the vehicle 1 is provided with a battery 100. The battery 100 may be provided at the bottom, head, or tail of the vehicle 1. The battery 100 may be configured to power the vehicle 1. For example, the battery 100 may be used as an operating power source of the vehicle 1.

The vehicle 1 may further include a controller 200 and a motor 300, where the controller 200 is configured to control the battery 100 to power the motor 300, for example, for a working power requirement of the vehicle 1 during starting, navigating, and driving.

In some embodiments of the present application, the battery 100 may be used not only as an operating power source for the vehicle 1, but also as a driving power source for the vehicle 1, instead of or partially instead of fuel or natural gas to provide driving power for the vehicle 1.

In some embodiments, the battery 100 may be clamped on the chassis of the vehicle 1 through a buckle structure.

As shown in FIG. 2, the battery 100 may refer to a single physical module that includes one or more battery cells 110 for providing a higher voltage and capacity.

In some embodiments, the battery 100 may be a battery pack.

As an example, the battery 100 includes a box 110 and a battery cell 120. The battery cell 120 is accommodated in the box 110.

The box 110 may be a component that accommodates the battery cell 120. The box 110 is an accommodation space for the battery cell 120, and the box 110 may have various structures.

In some embodiments, the box 110 may include a first box portion 110a and a second box portion 110b, the first box portion 110a and the second box portion 110b cover each other, and the first box portion 110a and the second box portion 110b jointly define the accommodation space for accommodating the battery cell 120. The second box portion 110b may be a hollow structure with an opening at an end. The first box portion 110a is a plate-shaped structure. The first box portion 110a covers an opening side of the second box portion 110b to form the box 110 having an accommodation space. The first box portion 110a and the second box portion 110b may each be hollow structures with an opening at an side. The opening side of the first box portion 110a covers the opening side of the second box portion 110b to form a box 110 having the accommodation space. Certainly, the first box portion 110a and second box portion 110b may be in various shapes such as cylinder, rectangular cuboid, etc.

Assuming that the first box portion 110a covers the top of the second box portion 110b, the first box portion 110a may also be referred to as an upper box cover, and the second box portion 110b may also be referred to as a lower box 110.

In the battery 100, one or more battery cells 120 may be provided. If a plurality of battery cells 120 are provided, the plurality of battery cells 120 may be subjected to series connection, parallel connection, or series-parallel connection, and the series-parallel connection means that the plurality of battery cells 120 are subjected to both series connection, and parallel connection.

The plurality of battery cells 120 may be directly connected in series, in parallel, or in a combination of both, and the whole of the plurality of battery cells 120 is accommodated in the box 110. Certainly, the plurality of battery cells 120 may be subjected to series connection, or parallel connection, or series-parallel connection to form a battery module, and a plurality of battery modules are integrated by series connection, parallel connection, or series-parallel connection, and accommodated in the box 110.

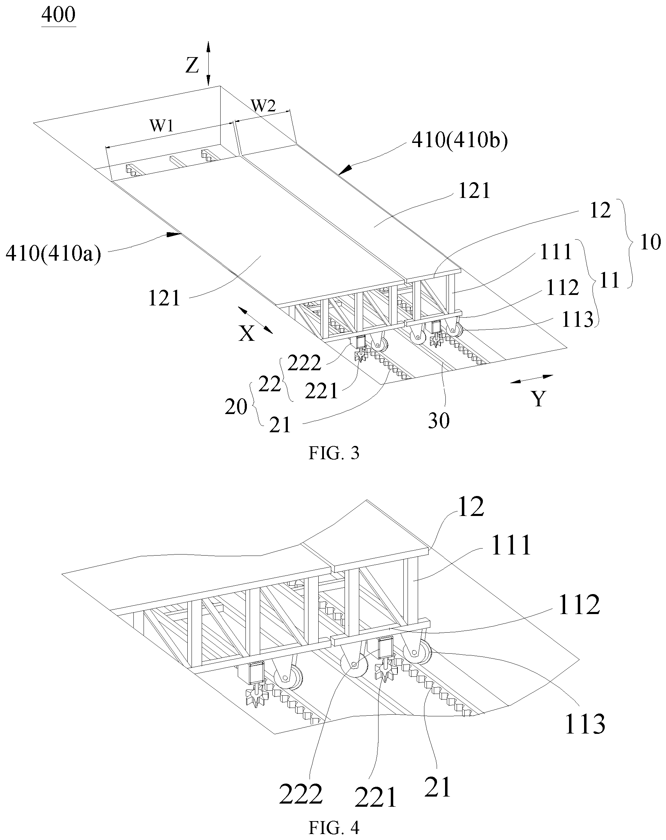

As shown in FIG. 3 and FIG. 4, an access bridge device 400 provided in an embodiment of the present application includes at least one access bridge frame 410. The access bridge frame 410 includes a support member 10 and a transmission member 20. The support member 10 includes a moving portion 11 and a bearing portion 12 arranged on the moving portion 11. The bearing portion 12 is used for supporting a vehicle 1. The transmission member 20 includes a guide portion 21 and a transmission portion 22. The guide portion 21 is extended in a first direction X. The transmission portion 22 is connected to the support member 10 and is drivingly fitted with the guide portion 21 to drive the support member 10 to move in the first direction X.

A quantity of the access bridge frame 410 included in the access bridge device 400 may be one, and of course, may also be two or more, for example, two, three or more. When the access bridge device 400 includes two or more access bridge frames 410, the two or more access bridge frames 410 may be distributed in a second direction Y. In addition, when the quantity of the access bridge frames 410 is two or more, dimensional specifications of the two or more access bridge frames 410 may be identical. Of course, the dimensional specifications of the two or more access bridge frames 410 may also be different.

A bearing portion 12 included in the access bridge frame 410 may be used to support the vehicle 1, and may be in a plate shape, a grid shape formed by a plurality of connected rods, or the like. A moving portion 11 is used to support the bearing portion 12, and support the bearing portion 12 at a predetermined height at a battery swap station. The moving portion 11 may be in a frame structure, and of course, may also be in the form of a support rod.

A guide portion 21 of a transmission member 20 may be connected to other structures of the battery swap station. The guide portion 21 includes, but is not limited to, structures such as a rack and a lead screw. The transmission portion 22 may include structures such as a gear 221, and a nut, and is drivingly fitted with the guide portion 21. The transmission portion 22 may be connected to the moving portion 11 of the support member 10, and of course, may also be connected to the bearing portion 12, so as to ensure both mounting of the transmission portion 22 and its transmission cooperation with the guide portion 21.

The transmission cooperation includes, but is not limited to, manners such as gear meshing, and cooperation of a lead screw and a nut, which can implement that the transmission portion 22 drives the support member 10 to move relative to the guide portion 21 as a whole.

The access bridge device 400 provided in the embodiments of the present application includes at least one access bridge frame 410. The access bridge frame 410 includes the support member 10 and the transmission member 20. The support member 10 includes the moving portion 11 and the bearing portion 12. The moving portion 11 is arranged, so that the bearing portion 12 can be supported and the bearing portion 12 is supported at a predetermined height, thereby providing support for a vehicle 1 when the vehicle 1 passes through a battery swap slot 510 of a battery swap station. Front wheels of the vehicle 1 are prevented from falling or being stuck in the battery swap slot 510, so that the vehicle 1 can safely pass through the battery swap slot 510. In addition, the transmission member 20 is correspondingly arranged. Its guide portion 21 is extended in the first direction X, and the transmission portion 22 is connected to the support member 10 and drivingly fitted with the guide portion 21, so that the support member 10 can be driven to move in the first direction X. After front wheels of a vehicle 1 passes through the battery swap slot 510 by being supported by the access bridge frame 410, the transmission member 20 and the guide portion 21 can cooperate to drive movement of the support member 10 to avoid a space of the battery swap slot 510, facilitating removal and swapping of a battery 100.

In some optional embodiments, according to the access bridge device 400 provided in the embodiments of the present application, the access bridge frame 410 has a quantity of two or more and are distributed in a second direction Y. The second direction Y intersects with the first direction X.

The quantity of the access bridge frame 410 may be two or three, and of course, may also be determined based on a size of the battery swap slot 510 and a quantity of batteries 100 included in a vehicle 1.

The second direction Y is optically perpendicular to the first direction Y.

Since an existing vehicle 1 usually includes two or more batteries 100, quantities of batteries 100 are different. A span size of the battery swap slot 510 in the second direction Y is also different. The access bridge device 400 includes two or more access bridge frames 410 distributed in the second direction Y, so that the access bridge device may be applicable for swapping a battery 100 in a battery swap station under different working conditions, such as a vehicle 1 including one battery 100, two batteries 100 or a plurality of batteries 100. It may be compatible with battery swapping for different vehicle types, therefore enabling high compatibility and improving operation efficiency and asset utilization.

In some optional embodiments, according to the access bridge device 400 provided in the embodiments of the present application, in the second direction Y, a width of one access bridge frame 410 of the two or more access bridge frames 410 is W1, and a width of another access bridge frame 410 of the two or more access bridge frames 410 is W2, where W1=2W2.

A width of a single access bridge frame 410 in the second direction Y may be understood as a width of the bearing portion 12. W2 may be greater than or equal to a width of a battery 100 in the second direction Y.

For example, using an example that an access bridge device 400 includes two access bridge frames 410, for the convenience of distinction, the two access bridge frames 410 may include a first access bridge frame 410a and a second access bridge frame 410b. In the second direction Y, a width of the first access bridge frame 410a is W1, and a width of the second access bridge frame 410b is W2, where W1=2W2. A width of W2 is greater than a width of a battery 100.

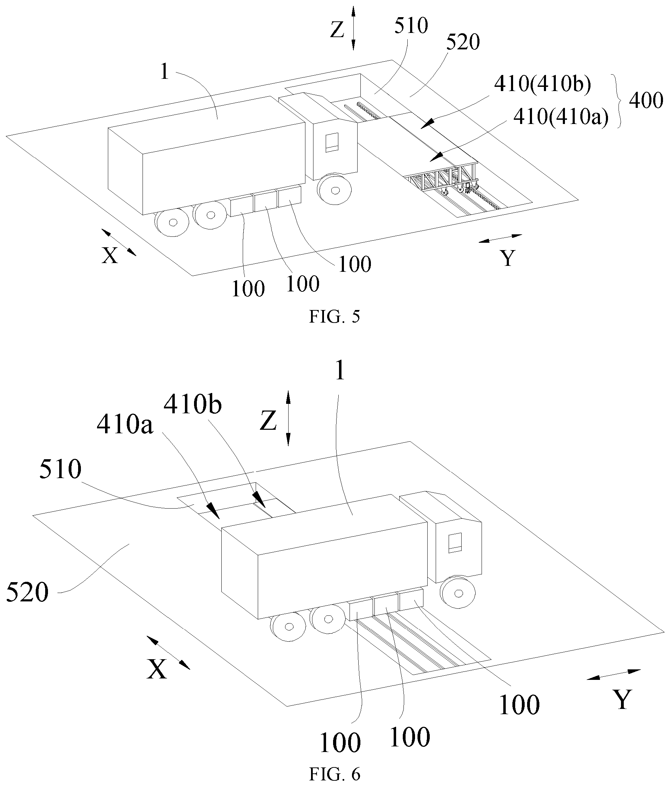

As shown in FIG. 5 to FIG. 7, in a case where three batteries 100 need to be swapped for a vehicle 1, after the vehicle 1 enters a station, support members 10 of two access bridge frames 410 may be controlled through a station control platform to move synchronously to specified positions in a first direction X. The vehicle 1 moves forward in a second direction Y and crosses a battery swap slot 510. After the vehicle 1 reaches a set position, the three batteries 100 to be swapped are just above the two access bridge frames 410.

When it is prepared to swap a battery, a station control platform controls support members 10 of two access bridge frames 410 to move in a first direction X to reach edge positions of a battery swap slot 510. In this case, batteries 100 are unblocked, so that three batteries 100 are suspended, thereby making a space for swapping batteries 100 in the battery swap slot 510. After battery swapping is completed, the support members 10 of the two access bridge frames 410 are controlled to move to a position below a vehicle 1 again, facilitating the vehicle 1 to leave a battery swap station.

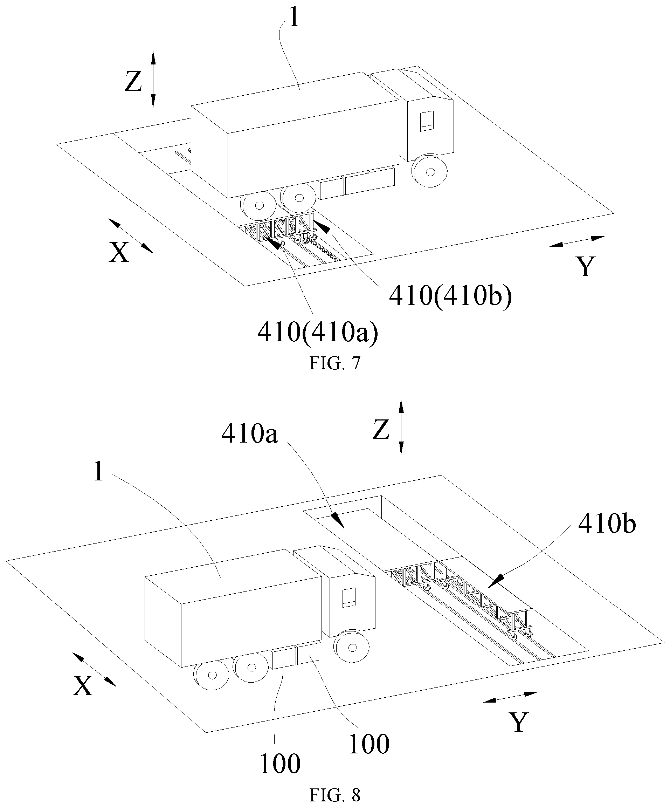

As shown in FIG. 8 to FIG. 9, in a case where two batteries 100 need to be swapped for a vehicle 1, a support member 10 of a first access bridge frame 410a may be moved to an edge of a battery swap slot 510 in a first direction X, and a second access bridge frame 410b is below a vehicle 1 to provide a bearing space. Wheels are pressed against the second access bridge frame 410b. After battery swapping is completed, the first access bridge frame 410a is moved to a position flush with the second access bridge frame 410b in the first direction X, facilitating the vehicle 1 to leave a battery swap station.

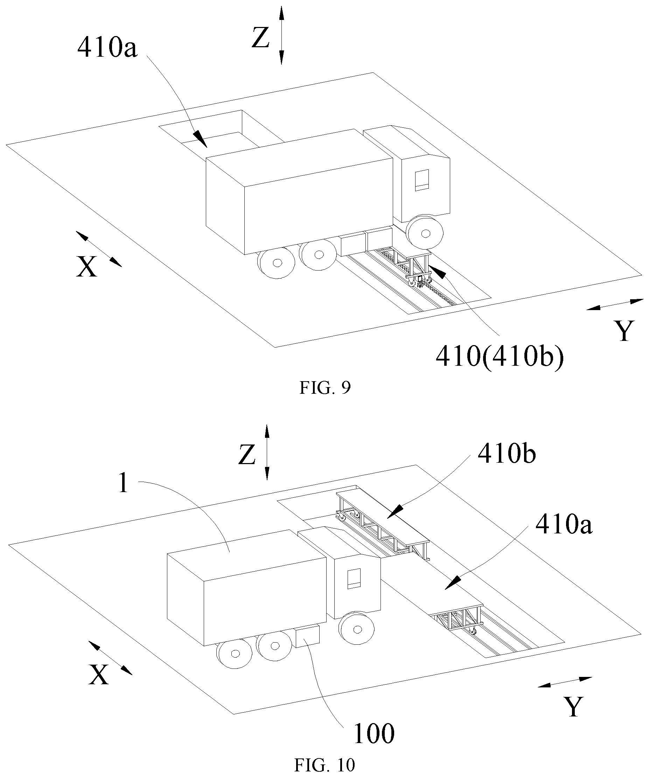

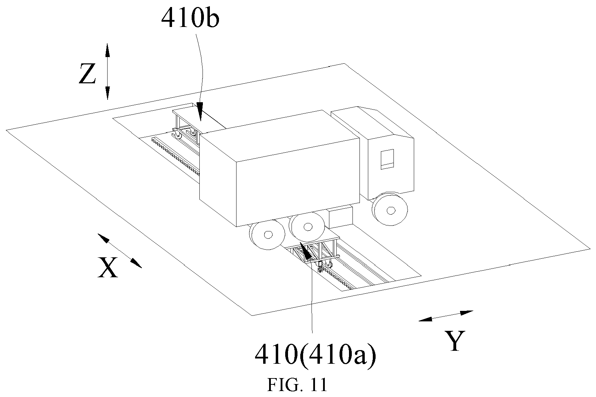

As shown in FIG. 10 and FIG. 11, when one battery 100a needs to be swapped for a vehicle 1, a support member 10 of a second access bridge frame 410b may be moved to an edge of a battery swap slot 510 in a first direction X. the first access bridge frame 410a is below the vehicle 1 to provide a bearing space. Wheels are placed on a first access bridge frame 410a. After battery swapping is completed, a second access bridge frame 410b is moved to a position flush with a first access bridge frame 410a in the first direction X, facilitating the vehicle 1 to leave a battery swap station.

According to the access bridge device 400 provided in the embodiments of the present application, in the second direction Y, a width of one access bridge frame 410 of two or more access bridge frames 410 is W1, a width of another one of the two or more access bridge frames 410 thereof is W2, where W1=2W2, so that swapping of a corresponding battery 100 can be at least satisfied for a vehicle 1 including one battery 100, two batteries 100, and three batteries 100, enabling high versatility.
It can be understood that when the access bridge device 400 includes two or more access bridge frames 410, the foregoing limitation is only an optional implementation. In some embodiments, it is also possible that in the second direction Y, a width of one access bridge frame 410 of the two or more access bridge frames 410 is W1

In some optional embodiments, according to the access bridge device 400 provided by the embodiments of the present disclosure, widths of respective access bridge frames 410 in the two or more access bridge frames 410 may be equal in the second direction Y.

Using an example including three access bridge frames 410, the three access bridge frames 410 are distributed in the second direction Y and have a same width in the second direction Y.

In the case where three batteries 100 need to be swapped for a vehicle 1, after the vehicle 1 enters a station, support members 10 of the three access bridge frames 410 may be controlled through a station control platform to move synchronously to specified positions in a first direction X. The vehicle 1 moves forward in a second direction Y and crosses a battery swap slot 510. After the vehicle 1 reaches a set position, the three batteries 100 to be swapped are just directly above the three access bridge frames 410.

When it is prepared to swap a battery, a station control platform controls support members 10 of three access bridge frames 410 to move in a first direction X to reach edge positions of a battery swap slot 510. In this case, batteries 100 are unblocked, so that three batteries 100 are suspended, thereby making a space for swapping batteries 100 in the battery swap slot 510. After battery swapping is completed, the support members 10 of the three access bridge frames 410 are controlled to move to a position below a vehicle 1 again, facilitating the vehicle 1 to leave a battery swap station.

In a case where two batteries 100 need to be swapped for a vehicle 1, support members 10 of two of the access bridge frames 410 may be moved to an edge of a battery swap slot 510 in a first direction X, and the remaining one access bridge frame 410 is below the vehicle 1 to provide a bearing space. After battery swapping is completed, the two access bridge frames 410 at convenient positions are moved in the first direction X to a position flush with another access bridge frame 410, facilitating the vehicle 1 to exit a battery swap station.

In a case where one battery 100 needs to be swapped for a vehicle 1, a support member 10 of one of the access bridge frames 410 may be moved to an edge of a battery swap slot 510 in a first direction X, and the remaining two access bridge frames 410 are below the vehicle 1 to provide a bearing space. After battery swapping is completed, the access bridge frames 410 at the edge position are moved to a position flush with other access bridge frames 410 in the first direction X, facilitating the vehicle 1 to exit a battery swap station.

According to the access bridge device 400 provided in the embodiments of the present application, in the second direction Y, widths of the access bridge frames 410 of the two or more access bridge frames 410 are equal. Again, swapping of a corresponding battery 100 of a vehicle 1 including one battery 100, two batteries 100, and three batteries 100 can also be satisfied, enabling high versatility.

Still referring to FIG. 3 and FIG. 4, in some optional embodiments, according to the access bridge device 400 provided in the embodiments of the present application, a moving portion 11 is a hollowed-out frame structure body. A transmission portion 22 is connected to the moving portion 11.

A hollowed-out frame structure may be that a plurality of hollow-out holes are provided on a support plate, or may be formed by connecting a plurality of rod structures.

At least a part of the transmission portion 22 and the moving portion 11 may be connected by a fixed connection manner such as welding, or may be connected to each other by a fastener and threaded connection manner, such as a bolt.

According to the access bridge device 400 provided in the embodiments of the present application, the moving portion 11 is a hollowed-out frame structure body, so that a strength of the moving portion 11 can be ensured, a weight and a cost of the moving portion 11 can also be reduced. In addition, a requirement for driving the moving portion 11 can be easily implemented by cooperation between the transmission portion 22 and the guide portion 21.

In some optional embodiments, according to the access bridge device 400 provided in the embodiments of the present application, the moving portion 11 includes an underframe 111 and a plurality of support rods 112. The plurality of support rods 112 are at least partially distributed in a first direction X. Each support rod 112 is connected between a bearing portion 12 and the underframe 111. A transmission portion 22 is connected to the underframe 111.

A quantity of the support rods 112 may be set based on a size and a strength bearing requirement of an access bridge frame 410.

The support rods 112 may be connected by welding, or may be connected by fasteners such as bolts.

The support rod 112 may adopt a rigid rod structure.

The underframe 111 may be a polygonal frame structure, or may be a plate-shaped structure, and optionally, may be a rectangular frame structure.

According to the access bridge device 400 provided in the embodiments of the present application, the moving portion 11 uses the foregoing form, so that a structure is simple, a cost is low, and a strength requirement can be ensured. The transmission portion 22 is connected to the underframe 111, facilitating installation of the transmission portion 22 and cooperation with the guide portion 21.

In some optional embodiments, according to the access bridge device 400 provided in the embodiments of the present application, a side of a bearing portion 12 facing away from a moving portion 11 has a horizontal support surface 121 for bearing a vehicle 1.

A regular plate-shaped structure with a predetermined thickness may be used for the bearing portion 12. Of course, a structure in other forms may also be used, such as a special-shaped structure having a horizontal support surface 121.

The horizontal support surface 121 may be a flat surface, or may be a surface having a coefficient of kinetic friction due to causes such as machining.

According to the access bridge device 400 provided in the embodiments of the present application, the side of the bearing portion 12 facing away from the moving portion 11 has the horizontal support surface 121, so that stable support can be provided for a vehicle 1 to drive, thereby reducing difficulty of the vehicle 1 in passing through a battery swap slot 510, and ensuring safety and stability for the vehicle 1 during battery swapping.

In some optional embodiments, according to the access bridge device 400 provided in the embodiments of the present application, a guide portion 21 includes a rack extending in a first direction X. A transmission portion 22 includes a gear 221 engaged with the guide portion 21 and a first driving portion 222 connected to the gear 221.

The guide portion 21 may include one rack. Of course, in the case of an enough installation space, a quantity of racks included in the guide portion 21 may also be two or more.

The first driving portion 222 includes, but is not limited to, a motor and the like. It is mainly used to drive rotation of a gear 221.

According to the access bridge device 400 provided in the embodiments of the present application, the guide portion 21 and the transmission portion 22 use the foregoing structural forms, and the first driving portion may 222 be used to drive the gear 221 to rotate. Since the gear 221 is engaged with the rack, and the first driving portion 222 is connected to the support member 10, the gear 221 can drive the support member 10 to move relative to the rack in the first direction X, thereby implementing an adjustment of an overall position of the support member 10 in the first direction X.

It can be understood that the above forms used for the guide portion 21 and the transmission portion 22 are only optional implementations. In some embodiments, the guide portion 21 may be enabled to include a lead screw extending in the first direction X and a second driving portion driving the lead screw to rotate. The transmission portion 22 includes a nut drivingly fitted with the lead screw. The nut is connected to the support member 10.

The second driving portion includes a motor, and is mainly configured to drive rotation of the lead screw.

According to the access bridge device 400 provided in the embodiments of the present application, with the foregoing arrangement, the second driving portion may be used to drive the lead screw to rotate, so that the nut is moved along the lead screw to drive the support member 10 to move in the first direction X, thereby also satisfying a position adjustment requirement for a support member 10.

In some optional embodiments, according to the access bridge device 400 provided in the embodiments of the present application, the access bridge frame 410 further includes a slide rail 30. The moving portion 11 is movably connected to the slide rail 30.

The moving portion 11 and the slide rail 30 may be connected in a sliding connection manner. Of course, a rolling connection manner may also be used.

The slide rail 30 may be a rail structure extending in the first direction X.

According to the access bridge device 400 provided in the embodiments of the present application, the access bridge frame 410 further includes the slide rail 30, and the moving portion 11 is movably connected to the slide rail 30, so that guidance can be provided for movement of the moving portion 11 in the first direction X, thereby ensuring stability during movement of the moving portion 11 in the first direction X.

In some optional embodiments, in the access bridge device 400 provided in the embodiments of the present application, the moving portion 11 has a traveling wheel 113, and the traveling wheel 113 is arranged on the slide rail 30 and is movably connected to the slide rail 30.

With the foregoing arrangement, on the basis of ensuring that the slide rail 30 provides support and a guidance effect for the moving portion 11, operating resistance applied to the moving portion 11 when it moves in the first direction X can be reduced, thereby ensuring smooth operation.

As shown in FIG. 3 and FIG. 4, the access bridge device 400 provided in the embodiments of the present application includes two access bridge frames 410. Each access bridge frame 410 includes a support member 10, a transmission member 20, and a slide rail 30. The support member 10 includes a moving portion 11 and a bearing portion 12 arranged on the moving portion 11. The bearing portion 12 is configured to support the vehicle 1. The transmission member 20 includes a guide portion 21 and a transmission portion 22. The guide portion 21 is extended in a first direction X. The transmission portion 22 is connected to the support member 10 and is drivingly fitted with the guide portion 21 to drive the support member 10 to move in the first direction X. Two access bridge frames 410 are distributed in a second direction Y. The second direction Y is perpendicular to the first direction X. In the second direction Y, a width of one access bridge frame 410 of the two access bridge frames 410 is W1, and a width of another access bridge frame 410 is W2, where W1=2W2. The moving portion 11 is a hollowed-out frame structure body. The moving portion 11 includes an underframe 111 and a plurality of support rods 112. the plurality of support rods 112 are at least partially distributed in the first direction X. Each support rod 112 is connected between the bearing portion 12 and the underframe 111. The transmission portion 22 is connected to the underframe 111. A side of the bearing portion 12 facing away from the moving portion 11 has a horizontal support surface 121. The guide portion 21 includes a rack extending in the first direction X. The transmission portion 22 includes a gear 221 engaged with the guide portion 21 and a first driving portion 222 connected to the gear 221. The first driving portion 222 is connected to the support member 10. The moving portion 11 has a traveling wheel 113. The traveling wheel 113 is arranged on the slide rail 30 and is movably connected to the slide rail 30.

On the other hand, an embodiment of the present application further provides a battery swap station. The battery swap station includes a support platform 500 and the access bridge device 400 provided in the foregoing embodiments. A battery swap slot 510 is concavely arranged on the support platform 500. The access bridge device 400 is arranged in the battery swap slot 510. In a first direction X, a width of the battery swap slot 510 is greater than a width of the access bridge frame 410.

The battery swap station provided in the embodiments of the present application includes the access bridge device 400 provided in the foregoing embodiments, so that an entry into the battery swap station and a swap of a battery 100a are facilitated for a vehicle 1.

In some optional embodiments, according to the battery swap station provided by the embodiments of the present application, the support platform 500 has a top surface 520. The battery swap slot 510 is concavely arranged on the top surface 520 in a third direction Z. A surface of the bearing portion 12 facing away from the moving portion 11 is flush with the top surface 520 in the third direction Z. The third direction Z intersects with the first direction X and the second direction Y, and optionally, they are perpendicular to each other. With the above arrangement, stability of operation can be ensured for vehicle 1 when it passes through the battery swap slot 510.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. An access bridge device comprising at least one access bridge frame, the access bridge frame comprising:
a support member, comprising a moving portion and a bearing portion arranged on the moving portion, the bearing portion being used for supporting a vehicle; and
a transmission member, comprising a guide portion and a transmission portion, the guide portion extending in a first direction, and the transmission portion being connected to the support member and drivingly fitted with the guide portion, in order to drive the support member to move in the first direction.

2. The access bridge device according to claim 1, wherein the access bridge frames have a quantity of two or more and are distributed in a second direction, and the second direction intersects with the first direction.

3. The access bridge device according to claim 2, wherein in the second direction, a width of one of the two or more access bridge frames is W1, and a width of another one of the two or more access bridge frames is W2, where W1=2W2;
or, in the second direction, widths of access bridge frames of the two or more access bridge frames are equal.

4. The access bridge device according to any one of claims 1 to 3, wherein the moving portion is a hollowed-out frame structure body, and the transmission portion is connected to the moving portion.

5. The access bridge device according to claim 4, wherein the moving portion comprises an underframe and a plurality of support rods, the plurality of support rods are at least partially distributed in the first direction, each of the support rods is connected between the bearing portion and the underframe, and the transmission portion is connected to the underframe.

6. The access bridge device according to any one of claims 1 to 5, wherein the guide portion comprises a rack extending in the first direction, the transmission portion comprises a gear engaged with the guide portion and a first driving portion connected to the gear, and the first driving portion is connected to the support member;
or the guide portion comprises a lead screw extending in the first direction and a second driving portion driving the lead screw to rotate, the transmission portion comprises a nut drivingly fitted with the lead screw, and the nut is connected to the support member.

7. The access bridge device according to any one of claims 1 to 6, wherein the access bridge frame further comprises a slide rail, and the moving portion is movably connected to the slide rail.

8. The access bridge device according to claim 7, wherein the moving portion has a traveling wheel, and the traveling wheel is arranged on the slide rail and is movably connected to the slide rail.

9. A battery swap station, comprising:
a support platform, wherein a battery swap slot is concavely arranged on the support platform; and
the access bridge device according to any one of claims 1 to 8, wherein the access bridge device is arranged in the battery swap slot, and in the first direction, a width of the battery swap slot is greater than a width of the access bridge frame.

10. The battery swap station according to claim 9, wherein the support platform has a top surface, the battery swap slot is concavely arranged in a third direction starting from the top surface, a surface of the bearing portion facing away from the moving portion is flush with the top surface in the third direction, and the third direction intersects with the first direction.
